Europäisches Patentamt

European Patent Office

Office européen des brevets

(11) Numéro de publication: **0 061 372 B1**

(12) **FASCICULE DE BREVET EUROPEEN**

(19)

⑪

(45) Date de publication du fascicule du brevet:
14.11.84

(21) Numéro de dépôt: **82400360.2**

(22) Date de dépôt: **02.03.82**

(51) Int. Cl.³: **G 03 H 1/22, G 02 F 1/05**

(54) Dispositif optique d'amplification en temps réel de l'énergie radiante d'un faisceau.

(30) Priorité: **13.03.81 FR 8105135**

(43) Date de publication de la demande:
**29.09.82 Bulletin 82/39**

(45) Mention de la délivrance du brevet:
**14.11.84 Bulletin 84/46**

(84) Etats contractants désignés:
**DE GB NL**

(56) Documents cités:
**JOURNAL OF THE OPTICAL SOCIETY OF AMERICA, vol. 65, no. 6, juin 1975, NEW YORK (US), S. CASE: "Coupled ware theory for multiply exposed thick holographic gratings" pages 724-729**
**OPTICS AND LASER TECHNOLOGY, vol. 11, no. 2, avril 1979, Ed. IPC, HAYWARDS HEARTH (GB), V. MARKOV et al.: "Dynamic holography and optical image processing" pages 95-99**
**JOURNAL OF APPLIED PHYSICS, vol. 43, no. 3, mars 1972, NEW YORK (US), D. STAEBLER et al.: "Coupled wave analysis of holographic storage in LiNbO3" pages 1042-1049**
**APPLIED OPTICS, vol. 15, no. 8, août 1976, NEW YORK (US), S. SU et al.: "Refractive index profile and physical process determination in thick gratings in electro-optical crystals" pages 1947-1952**

(73) Titulaire: **THOMSON-CSF, 173, Boulevard Haussmann, F-75379 Paris Cedex 08 (FR)**

(72) Inventeur: **Huignard, Jean-Pierre, THOMSON-CSF SCPI 173, bld Haussmann, F-75360 Paris Cedex 08 (FR)**
Inventeur: **Marrakchi El Fellah, Abdellatif, THOMSON-CSF SCPI 173, bld Haussmann, F-75360 Paris Cedex 08 (FR)**

(74) Mandataire: **Lepercque, Jean et al, THOMSON-CSF SCPI 173, Bld Haussmann, F-75379 Paris Cedex 08 (FR)**

(56) Documents cités: (suite)
**JOURNAL OF APPLIED PHYSICS, vol. 51, no. 3, mars 1980, NEW YORK (US), J. FEINBERG et al.: "Photorefractive effects and light charge migration in Barium Titanate" pages 1297-1305**

## Description

L'invention se rapporte à un dispositif optique d'amplification en temps réel de l'énergie radiante d'un faisceau.

Pour réaliser cette amplification, on peut interposer un dispositif optique sur le trajet du faisceau considéré. Il est connu d'utiliser un dispositif optique constitué d'un milieu d'enregistrement dans lequel interfèrent le faisceau considéré et un second faisceau de référence. Ce milieu d'enregistrement peut être, par exemple, un matériau électro-optique photosensible tel que l'oxyde de bismuth-silicium ou BSO.

Ainsi, l'article paru dans «Optics and Laser Technology», volume 11, en 1979, pp. 95-99, décrit des applications possibles de l'holographie dynamique pour l'amplification d'image. Il a trait à des milieux non linéaires réversibles, tels que l'oxyde de bismuth-silicium (BSO), qui permettent l'amplification d'ondes de lumière cohérente, d'images à 2 ou 3 dimensions constantes ou évoluant dans le temps.

Dans de tels matériaux, un réseau de franges, créé par l'interférence du front d'onde provenant de l'objet et du front d'onde de référence, induit, en temps réel, au temps d'inscription du matériau près, un réseau de strates d'indice, constituant un hologramme caractéristique du front d'onde objet. Il diffracte une partie de l'énergie du front d'onde de référence incident selon une onde diffractée dont le front d'onde est isomorphe du front d'onde objet. En utilisant ainsi ces phénomènes de couplage d'ondes dans les supports photosensibles et épais tels que le monocristal BSO, on peut réaliser un transfert d'énergie notable du faisceau référence vers le faisceau objet après traversée de ce cristal. L'intensité du faisceau objet directement transmis est augmentée, en pratique, d'un facteur 2 à 3 en présence du faisceau de référence qui agit, dans ces conditions, comme une onde de pompage. Mais seul l'enregistrement par diffusion à champ nul satisfait aux conditions optimales pour ce couplage d'ondes. Ces conditions ne sont plus vérifiées lorsqu'on applique un champ électrique qui permet d'induire une variation d'indice élevée.

L'invention se rapporte à ces techniques de couplage d'ondes dans des matériaux permettant l'inscription d'hologrammes dynamiques par variation d'indice photo-induite. Le dispositif proposé assure dans les conditions optimales, en présence d'un champ transversal appliqué au matériau considéré, le transfert d'énergie de l'onde de référence vers l'onde objet. Pour réaliser ces conditions, on introduit un déplacement de franges d'interférence. A ce titre, ce dispositif permet l'amplification cohérente de l'énergie radiante d'un faisceau.

L'invention a donc pour objet un dispositif optique d'amplification en temps réel de l'énergie radiante d'un faisceau lumineux comprenant un matériau d'enregistrement consistant en un cristal électro-optique photosensible et ayant un temps d'inscription $\tau$ au sein duquel est inscrit, en temps réel, un réseau de strates d'indice photo-induites obtenu grâce à l'interférence, dans le volume de ce matériau, d'un faisceau objet incident issu d'une source cohérente et d'un faisceau de référence qui lui est cohérent, un transfert d'énergie ayant lieu entre ce faisceau de référence et ce faisceau objet, un champ électrique orthogonal au plan des strates étant appliqué aux bornes de ce matériau; dispositif caractérisé en ce que des moyens mécaniques permettent un déplacement tel de ce matériau photosensible pendant le temps d'inscription du matériau que le déphasage entre le réseau de strates d'indice et le réseau de franges d'interférence de ces deux faisceaux est ainsi maintenu constant et égal à $\pi/2$.

D'autres caractéristiques et avantages de modes de réalisation de l'invention apparaîtront dans la description ci-après, en référence aux figures annexées où:
— les fig. 1 à 4 sont des figures explicatives;
— la fig. 5 représente une courbe explicative des variations d'indice après illumination par un réseau de franges;
— la fig. 6 représente une courbe explicative de la variation d'indice pour une vitesse de déplacement des franges;
— la fig. 7 est un schéma du dispositif optique selon l'invention;
— les fig. 8 et 9 sont des variantes de ce dispositif;
— la fig. 10 est la courbe de déplacement du miroir piézo-électrique représenté à la fig. 9.

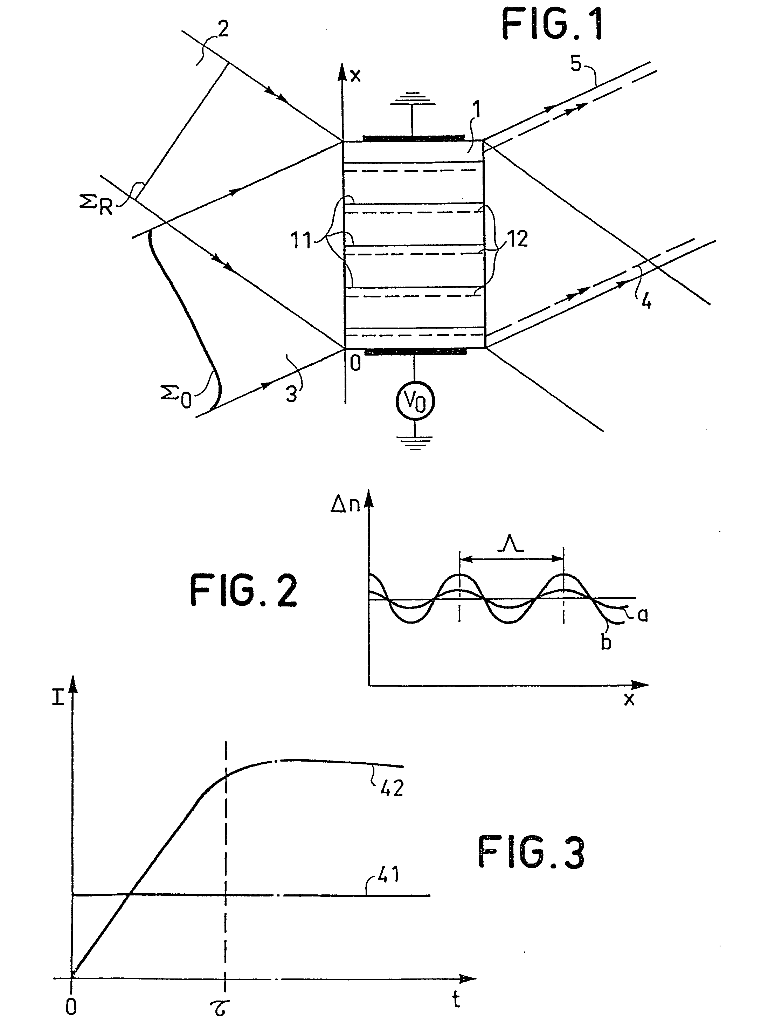

Le dispositif proposé dans le présent brevet est fondé sur l'inscription holographique dynamique sur un support photosensible fonctionnant par variation d'indice photo-induite. Le fonctionnement est illustré schématiquement à la fig. 1. Le front d'onde signal $\Sigma_o$ diffracté par l'objet interfère de façon cohérente avec une onde plane référencée $\Sigma_R$. Le réseau de franges d'interférence est inscrit en temps réel dans le matériau sous la forme d'une variation d'indice photo-induite. Physiquement, le couplage d'ondes se traduit par un transfert d'énergie du faisceau référence vers l'onde signal après traversée du cristal. L'intensité du faisceau objet est donc augmentée en présence du faisceau référence qui, dans ces conditions, agit comme une onde de pompage.

Sur la face avant du milieu d'interaction, le taux de modulation des franges dû à l'interférence de ces deux faisceaux est faible:

$$m \simeq 2 \sqrt{\frac{I_o}{I_R}} \text{ avec } I_o \ll I_R$$

$I_o$ et $I_R$ étant les intensités lumineuses des faisceaux.

Le milieu d'interaction étant dynamique, l'onde référence diffractée par le réseau de phase génère une onde $\Sigma_d$ identique à l'onde signal.

Cette onde $\Sigma_d$ est en phase avec l'onde objet incidente $\Sigma_o$ si le réseau d'indice est déphasé de $\Psi = \pi/2$ par rapport à la modulation spatiale d'intensité lumineuse due aux franges d'interférence. Dans ces conditions, le taux de modulation des franges augmente après le passage des

0 061 372

faisceaux dans le milieu d'interaction. Selon ce processus, le matériau se comporte comme un support à caractéristique non linéaire, et un transfert d'énergie notable du faisceau référence 2 vers le faisceau objet 3 peut être obtenu.

Sur la fig. 1, sur le trajet de l'onde objet 3 de front d'onde $\Sigma_o$ est disposé un monocristal épais 1, taillé dans un matériau électro-optique photoconducteur, par exemple BSO. Dans l'épaisseur du cristal, cette onde objet 3 interfère avec une onde de référence 2, de front d'onde plan $\Sigma_R$.

Le réseau de franges d'interférence 11 ainsi créé génère, en temps réel, dans le cristal, un réseau de strates d'indice 12, après un temps d'inscription $\tau$. Ce réseau de strates diffracte une partie de l'énergie de l'onde de référence 2 en une onde diffractée 4 dont le front d'onde est isomorphe du front d'onde objet $\Sigma_o$.

Or, dans le cas du monocristal BSO et des autres cristaux électro-optiques photosensibles analogues, le réseau photo-induit peut être déphasé exactement de $\pi/2$ par rapport au réseau d'illumination incident, ce qui a comme conséquence d'obtenir une onde diffractée 4 strictement superposée à l'onde objet transmise 5; tout se passe comme si l'onde objet transmise était enrichie d'une fraction de l'énergie de l'onde de référence. Si l'épaisseur du cristal concernée par l'interférence des deux faisceaux est grande, de l'ordre de 1 cm, le faisceau objet transmis peut être considérablement renforcé, d'un facteur 2 à 3. En effet, sur la face avant du cristal, l'interférence des deux faisceaux est responsable d'un renforcement du faisceau objet selon le processus qui vient d'être décrit, renforcement très faible il est vrai puisque, sur cette face d'entrée, le rapport des intensités des faisceaux objet et référence étant en pratique de l'ordre de $10^{-3}$ à $10^{-4}$, le taux de modulation des franges est très faible, comme montré sur la fig. 2 en a.

En se propageant dans le cristal, cette onde objet renforcée interfère à nouveau avec le faisceau de référence, ce qui accentue la modulation des franges et crée un apport d'énergie sur le faisceau objet un peu plus important, et ainsi, de proche en proche, tout au long de l'épaisseur du cristal dans laquelle les faisceaux objet et référence interfèrent, parce que le nouveau réseau photo-induit est toujours en phase avec le réseau principal, grâce au déphasage de $\pi/2$ entre le réseau d'interférence et le réseau d'indice. Sur la face de sortie, le taux de modulation des franges est plus important que sur la face d'entrée, comme représenté sur la fig. 2 en b.

Ainsi, si la longueur d'interaction dans le milieu est suffisante, on peut obtenir une augmentation notable de l'intensité du faisceau objet émergeant, pratiquement d'un facteur 2 à 3.

On a représenté sur le diagramme de la fig. 3 cette augmentation du faisceau transmis due au couplage d'ondes dans un cristal épais. Sur ce diagramme intensité en fonction du temps, la droite 41 représente l'intensité du faisceau objet directement transmis, en l'absence du faisceau référence 3. Cette intensité est constante à partir du temps 0 où le faisceau objet incident arrive sur le cristal BSO.

La courbe 42 montre l'établissement, au bout du temps $\tau$, du faisceau objet diffracté dans le cas de la présente invention, avec une intensité deux à trois fois supérieure à celle du faisceau objet directement transmis, l'énergie de ce faisceau diffracté étant prélevée sur le faisceau de référence.

Le cristal 1 peut être, ou non, soumis à un champ électrique transversal, dans le sens de l'axe OX sur la fig. 1, le déphasage de $\pi/2$ entre le réseau d'interférence et le réseau d'indice s'établit automatiquement, mais l'efficacité du phénomène d'amplification est d'autant plus grande que le champ électrique appliqué est plus élevé, typiquement entre 10 et 20 kV·cm$^{-1}$. Cette inscription à saturation du réseau d'indice à partir du réseau de franges d'interférence n'est pas instantanée et requiert un certain temps $\tau$, typiquement 100 ms, et il en va de même pour l'effacement du réseau.

La mise en œuvre des phénomènes de transfert d'énergie dans un cristal BSO nécessite une orientation cristallographique telle que le champ soit appliqué dans la direction [001] et que les franges soient perpendiculaires à la direction moyenne du champ:

$$I(x) = I_o(1 + m \cos Kx)$$

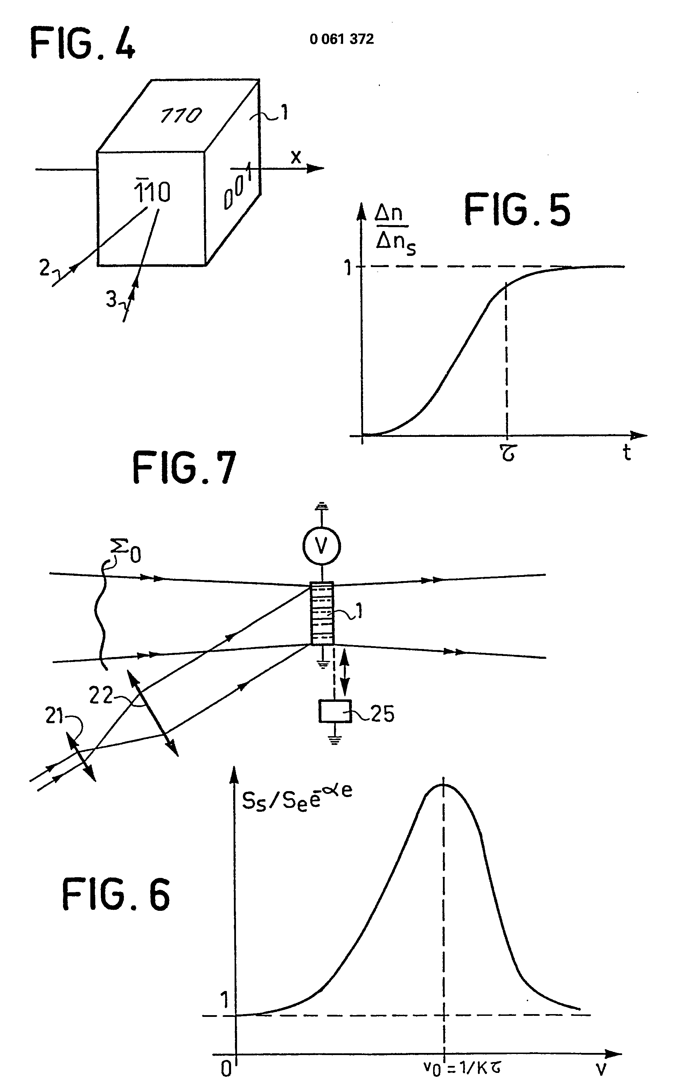

Ainsi, l'orientation préférentielle du monocristal par rapport à la direction du champ électrique qui est l'axe des x est celle qui est représentée sur la fig. 4, c'est-à-dire perpendiculaire aux faces de la forme 001 du cristal. L'incidence des faisceaux sur les faces de la forme {110} ou {$^-$110} et qui détermine le pas des franges, est optimale autour de 20 à 30°, par exemple +20° pour le faisceau objet, $-20°$ pour le faisceau référence. Les constantes de temps $\tau$ mises en jeu pour le transfert d'énergie du faisceau de référence vers le faisceau objet sont pratiquement indépendantes du rapport des intensités des faisceaux incidents, référence et objet, $\tau$ varie de 50 à 100 ms quand ce rapport varie de 1 à 1000. Le coefficient d'amplification obtenu sur le faisceau objet transmis est également indépendant de ce rapport dès qu'il est supérieur à 10 et est une fonction non linéaire du champ électrique appliqué au cristal lorsque ce champ dépasse une valeur de seuil de 10 kV·cm$^{-1}$. Il est par ailleurs technologiquement difficile de travailler à plus de 20 kV·cm$^{-1}$.

Il y a deux modes d'enregistrement de la variation d'indice photo-induite.

Un enregistrement par diffusion à champ nul $E_o = 0$; $\Lambda \simeq 0,5$ à 1 µm.

Dans ce cas, l'amplitude de la modulation d'indice photo-induite $\Delta n_a$ est faible, mais proportionnelle au gradient de l'illumination:

$$\Delta n_a \propto \frac{dI}{dx}$$

et un enregistrement par dérive sous champ appliquée $E_o \simeq 6$ kV·cm$^{-1}$; $\Lambda \simeq 3$ µm.

Ce champ est appliqué perpendiculairement au plan des strates d'indice. Dans ce cas, l'amplitude de la variation d'indice $\Delta n_b$ est élevée et pratiquement en phase avec l'illumination

$$n_b \propto I(x); \Delta n_b \gg \Delta n_a$$

Seul l'enregistrement par diffusion à champ nul $E_o = 0$ satisfait aux conditions optimales pour le couplage d'ondes $\psi = \pm \pi/2$. Cependant, les transferts d'énergie obtenus expérimentalement restent limités, car la variation d'indice photo-induite est faible.

Le présent dispositif permet d'exploiter la variation d'indice élevée due à l'enregistrement sous champ appliqué en introduisant un déplacement convenable des franges d'interférence pendant le temps d'inscription du matériau.

Ce déplacement du matériau conduit à un déphasage du réseau photo-induit par rapport à l'illumination incidente. Pour une vitesse convenable, ce déphasage peut être ajusté à la valeur optimale $\psi = \pm \pi/2$. Dans ces conditions, on met en évidence de façon expérimentale un transfert d'énergie important de l'onde de référence vers l'onde signal après traversée du cristal. L'amplification de l'image incidente a été obtenue pour des valeurs du champ appliqué supérieures à $6 \ kV \cdot cm^{-1}$ avec un pas des strates $\Lambda \simeq 3 \ \mu m$.

L'illumination incidente qui correspond à l'interférence des deux faisceaux 2 et 3 est un signal de la forme:

$$I(x, t) = I_o (1 + m \cos \vec{k} x)$$

$m$ étant le taux de modulation et $\vec{k}$ le vecteur d'onde tel que $k = \dfrac{2\pi}{\Lambda}$, $\Lambda$ étant le pas des strates.

Pour un matériau à réponse non locale, ce qui est le cas d'un milieu électro-optique soumis à un champ électrique, on a:

$$\Delta n = \Delta n_o \cos (K x + \phi')$$

$\Delta n$ étant la variation d'indice dans le milieu.

L'idéal tel que défini précédemment serait d'avoir $\phi' = \pi/2$ et donc $\Delta n = \Delta n_o \sin k x$, mais cela n'est pas possible dans le cas considéré. En présence d'un champ électrique, il n'y a plus couplage optimal des ondes à l'intérieur du milieu, d'où la nécessité d'un déplacement des strates: soit $V$ la vitesse de ces strates, si $\tau$ est le temps d'inscription des strates, on a la réponse temporelle suivante: $\Delta n = \Delta n_s \left( 1 - e^{\frac{-t}{\tau}} \right)$. Celle-ci est illustrée à la fig. 5, $\Delta n_s$ étant la valeur de $\Delta n$ à saturation.

Lors de ce déplacement des strates, on a:

$$I(x, t) = I_o [1 + m \cos (k(x - vt))]$$

avec $m$: taux de modulation

$$\Delta n \propto I(x, t)$$

on a $\Delta n(x, t)$ qui est une réponse impulsionnelle

$$\Delta n(x, t) = I(x, t) \times \delta(t)$$

$\delta T(t)$ étant la réponse du matériau

$$\Delta n = \Delta n_s \int_o^t m \cos k (x - vt') e^{-\frac{(t - t')}{\tau}} dt'$$

$$\Delta n = m \Delta n_s \cos \phi \cos [k (x - vt) + \phi]$$

avec $tg \ \phi - k v \tau$

$\tau$ étant le retard d'établissement de $\Delta n$ comme représenté à la fig. 5.

$\Delta n$ peut se décomposer en $\Delta n_1$ et $\Delta n_2$, $\Delta n_1$ étant en phase avec l'illumination et $\Delta n_2$ en quadrature avec cette illumination.

$$\Delta n_1 = m \Delta n_s \cos \phi \cos \phi \cos k (x - vt)$$
$$\Delta n_2 = m \Delta n_s \cos \phi \sin \phi \sin k (x - vt)$$

$\Delta n_2$ est la composante qui permet un couplage d'ondes tel que l'on ait un transfert d'énergie optimal.

$\Delta n_2$ est un maximal pour $\phi = \pi/4$
$\Rightarrow tg \ \phi = 1 = k v$

$$\Delta n_2 = m \frac{\Delta n_s k v \tau}{1 + k^2 v^2 \tau^2} \sin k (x - vt)$$

$$\Rightarrow \Delta n_2 = \frac{m \Delta n_s}{2} \sin k (x - vt)$$

On a une courbe de la forme illustrée à la fig. 6.

Elle passe par un maximum pour $V_o = \dfrac{\Lambda}{2 \pi \tau}$.

On a alors une amplification telle que:
$$S_s = S_e \ e^{(\Gamma - \alpha)e}$$

$S_s$ étant le signal de sortie, $S_e$ le signal d'entrée, $\alpha$ les pertes d'absorption et $\Gamma$ l'amplification avec e la longueur d'interaction dans le cristal

$$\Gamma = \frac{4\pi \ \Delta n_2}{\lambda \cos \theta}$$

$\theta$ étant le demi-angle entre les faisceaux d'inscription incidents dans le milieu, pour $k v \tau = 1$, on a $\Gamma$ optimal.

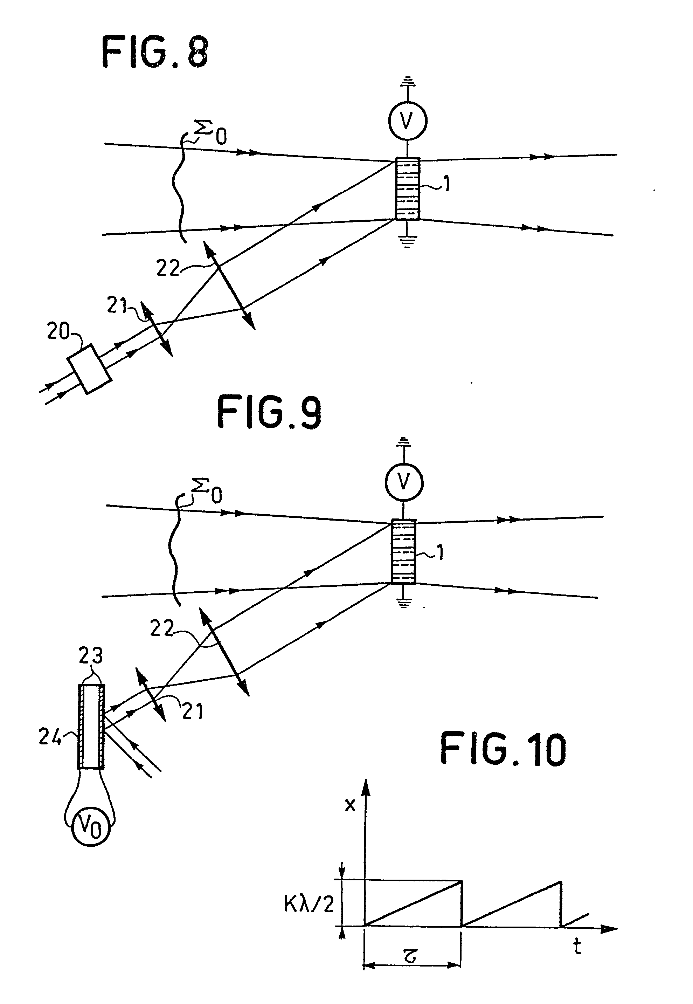

Pour réaliser ce déplacement des strates, on peut déplacer le milieu 1 à la vitesse v à l'aide d'un moteur 25, et cela pendant le temps d'inscription $\tau$ du milieu comme représenté à la fig. 7, mais on pent s'affranchir de ce déplacement du matériau en plaçant un modulateur de phase 20 sur le trajet de l'onde de référence, comme représenté à la fig. 8. Celui-ci assure un déplacement des franges à une vitesse v telle que $v\tau = \dfrac{\Lambda}{2\pi}$. On peut réaliser ce déphasage à l'aide d'un miroir associé à un transducteur piézo-électrique par exemple, ou à l'aide d'un dispositif acousto-optique selon les vitesses nécessaires. Une réalisation de ce déphasage avec un miroir 24 associé à un transducteur piézo-électrique est illustrée à la fig. 9. Pour un fonctionnement séquentiel, on a un signal de commande $V_o$ en forme de dents de scie, comme illustré à la fig. 10. Ce miroir 24 est réalisé, par exemple, avec un matériau piézo-électrique ayant la forme d'un film et dont l'une des faces est métallisée; ce peut être d'ailleurs l'une des électrodes de commande 23, comme représenté à la fig. 9.

Le signal en dents de scie permet de réaliser un déplacement des strates qui paraît régulier. L'amplitude de ce signal doit permettre un déplacement d'un nombre entier de franges. La courbe de la fig. 10 représente le déplacement du miroir. Si $\lambda$ est

la longueur d'onde du faisceau réfléchi, un déplacement du miroir étant amplifié par deux au niveau du faisceau, le déphasage représenté par ce signal est donc égal à $k\frac{\lambda}{2}$.

Ainsi la vitesse de déplacement v est telle que $v\tau = \frac{\Lambda}{2\pi}$, on se trouve dans les conditions optimales quant au transfert d'énergie. On peut, par exemple, considérer les valeurs suivantes:

$\tau \simeq 1\ ms \cdot \Lambda = 3\ \mu m$

$\Rightarrow v = \frac{\Lambda}{2\pi\ \tau} \simeq 500\ \mu m/s$

Pour un champ appliqué $E_o = 10\ kVcm^{-1}$, le gain $\Gamma$ obtenu est $\Gamma = 2,4\ cm^{-1}$, soit: $S_s$:1,5 $S_e$ pour $\alpha = 1,9\ cm^{-1}$.

Le dispositif décrit précédemment peut être appliqué à d'autres types de matériaux dont les constantes de temps sont beaucoup plus courtes que celles obtenues avec un cristal de BSO; par exemple, avec des matériaux semi-conducteurs, on peut obtenir $\tau = 10^{-9}\ s$. Un déplacement rapide des franges d'interférence est obtenu facilement avec un dispositif acousto-optique. Ce dispositif fonctionne par exemple à une fréquence F: $\frac{1}{2\pi\ \tau}$

avec $\tau = 10^{-9}\ s$, F $\simeq 200\ MHz$.

On utilise alors un phénomène de glissement acousto-optique pour un fonctionnement continu, le matériau acousto-optique étant piloté par un signal de fréquence F. Le signal incident ayant une fréquence fo, le signal qui émerge a une fréquence fr = fo + F: les indices o et r sont relatifs respectivement au pinceau incident et au pinceau dévié et la majuscule à l'onde acoustique. En effet, la propagation d'une onde acoustique dans un milieu réfringent se traduit, sur l'indice optique de ce milieu, par une perturbation ondulatoire synchrone dont l'origine se trouve dans la modulation apportée à la densité locale de matière par la distribution locale des pressions.

A une onde progressive de fréquence F correspond donc, au point de vue optique, un réseau de phase dans ce matériau acousto-optique dont le pas est égal à $\Lambda_F = \frac{V_F}{F}$ et donc, comme $v_F\tau_F = \frac{\Lambda F}{2\pi\tau_F}$,

$F = \frac{1}{2\pi\tau_F}$.

On peut considérer:

$\Lambda_F = 3\ \mu m$, $\tau_F = 1\ ns$; $v_F = 0,5\times10^9\ \mu m/s$ et F $\simeq 200\ MHz$

On peut placer tout aussi bien le modulateur de phase ou le dispositif acousto-optique sur le faisceau objet incident et non plus sur le faisceau référence.

## Revendications

1. Dispositif optique d'amplification en temps réel de l'énergie radiante d'un faisceau lumineux comprenant un matériau d'enregistrement consistant en un cristal électro-optique photosensible (1) et ayant un temps d'inscription $\tau$ au sein duquel est inscrit en temps réel un réseau de strates d'indice photo-induites (12) obtenu grâce à l'interférence dans le volume de ce matériau (1) d'un faisceau objet incident (2) issu d'une source cohérente, et d'un faisceau de référence (3) qui lui est cohérent, un transfert d'énergie ayant lieu entre ce faisceau de référence (3) et ce faisceau objet (2), un champ électrique orthogonal au plan des strates étant appliqué aux bornes de ce matériau (1), dispositif caractérisé en ce que des moyens mécaniques permettent un déplacement tel de ce matériau photosensible (1), pendant le temps d'inscription du matériau, que le déphasage entre le réseau de strates d'indice (12) et le réseau de franges d'interférence (11) de ces deux faisceaux est ainsi maintenu constant et égal à $\pi/2$.

2. Dispositif selon la revendication 1, caractérisé en ce que les moyens mécaniques comportent un moteur (25).

3. Dispositif selon l'une des revendications précédentes, caractérisé en ce que la vitesse de déplacement du matériau photosensible (1) est égale à

$$\frac{\Lambda}{2\ \pi\ \tau}$$

$\Lambda$ étant le pas des strates.

4. Dispositif optique d'amplification en temps réel de l'énergie radiante d'un faisceau lumineux comprenant un matériau d'enregistrement consistant en un cristal électro-optique photosensible (1) et ayant un temps d'inscription $\tau$ au sein duquel est inscrit, en temps réel, un réseau de strates d'indice photo-induites (12) obtenu grâce à l'interférence dans le volume de ce matériau (1) d'un faisceau objet incident (2) issu d'une source cohérente, et d'un faisceau de référence (3) qui lui est cohérent, un transfert d'énergie ayant lieu entre ce faisceau de référence (3) et ce faisceau objet (2), un champ électrique orthogonal au plan des strates étant appliqué aux bornes de ce matériau (1), dispositif caractérisé en ce que des moyens modulateurs de phase sont disposés sur le trajet de l'un des deux faisceaux entraînant un déplacement tel des strates, pendant le temps d'inscription du matériau, que le déphasage entre le réseau de strates d'indice (12) et le réseau de franges d'interférence (11) de ces deux faisceaux est ainsi maintenu constant et égal à $\pi/2$.

5. Dispositif selon la revendication 4, caractérisé en ce que les moyens modulateurs de phase comportent un miroir (24) associé à un transducteur piézo-électrique.

6. Dispositif selon la revendication 5, caractérisé en ce que la courbe du déplacement du miroir en fonction du temps est une dent de scie.

7. Dispositif selon la revendication 6, caractérisé en ce que cette dent de scie a une période de $\tau$ et une amplitude de déphasage de $k\lambda/2$, $\lambda$ étant la longueur d'onde du faisceau sur le trajet duquel est placé le miroir, k étant un nombre entier supérieur ou égal à 1.

8. Dispositif selon la revendication 7, caractérisé en ce que la vitesse de déplacement du miroir est égale à

$$\frac{\Lambda}{2\pi\tau}$$

$\Lambda$ étant le pas des strates.

9. Dispositif selon la revendication 4, caractérisé en ce que les moyens modulateurs de phase comportent un dispositif acousto-optique.

10. Dispositif selon l'une quelconque des revendications précédentes, caractérisé en ce que le matériau d'enregistrement est un monocristal d'oxyde de bismuth-silicium.

11. Dispositif selon la revendication 10, caractérisé en ce que le champ électrique est appliqué dans la direction [001] du monocristal, l'incidence des faisceaux se faisant sur les faces de la forme {110} ou {⁻110}.

## Patentansprüche

1. Optische Verstärkungsvorrichtung für die Energie eines Lichtstrahls in Echtzeit, mit einem Registriermaterial, das aus einem lichtempfindlichen elektrooptischen Kristall (1) besteht und eine Einschreibzeit $\tau$ hat, in der in Echtzeit ein Netz von lichtinduzierten Indexschichten (12) eingeschrieben wird aufgrund der Interferenz eines einfallenden Objektstrahls (2), der von einer kohärenten Lichtquelle stammt, mit einem hierzu kohärenten Referenzstrahl (3) in dem Volumen dieses Materials (1), wobei ein Energietransfer zwischen dem Referenzstrahl (3) und dem Objektstrahl (2) erfolgt und ein zur Ebene der Schichten senkrecht verlaufendes elektrisches Feld an die Anschlüsse dieses Materials (1) angelegt ist, dadurch gekennzeichnet, dass mechanische Mittel eine solche Verschiebung dieses lichtempfindlichen Materials (1) während der Einschreibzeit ermöglichen, dass die Phasenverschiebung zwischen dem Netz von Indexschichten (12) und dem Netz von Interferenzlinien (11) dieser beiden Strahlen konstant gehalten wird und gleich $\pi/2$ ist.

2. Vorrichtung nach Anspruch 1, dadurch gekennzeichnet, dass die mechanischen Mittel einen Motor (25) enthalten.

3. Vorrichtung nach einem der vorhergehenden Ansprüche, dadurch gekennzeichnet, dass die Geschwindigkeit, mit der das lichtempfindliche Material (1) verschoben wird, gleich $\Lambda/(2\pi\tau)$ ist, wobei $\Lambda$ der Abstand der Schichten ist.

4. Optische Verstärkungsvorrichtung für die Energie eines Lichtstrahls in Echtzeit, mit einem Registriermaterial, das aus einem lichtempfindlichen elektrooptischen Kristall (1) besteht und eine Einschreibzeit $\tau$ hat, in der in Echtzeit ein Netz von lichtinduzierten Indexschichten (12) eingeschrieben wird aufgrund der Interferenz eines einfallenden Objektstrahls (2), der von einer kohärenten Lichtquelle stammt, mit einem hierzu kohärenten Referenzstrahl (3) in dem Volumen dieses Materials (1), wobei ein Energietransfer zwischen dem Referenzstrahl (3) und dem Objektstrahl (2) erfolgt und ein zur Ebene der Schichten senkrecht verlaufendes elektrisches Feld an die Anschlüsse dieses Materials (1) angelegt ist, dadurch gekennzeichnet, dass Phasenmodulationsmittel im Strahlenweg eines der beiden Strahlen angeordnet sind, die eine solche Verschiebung der Schichten während der Einschreibzeit bewirken, dass die Phasenverschiebung zwischen dem Netz von Indexschichten (12) und dem Netz von Interferenzlinien (11) dieser beiden Strahlen konstant gehalten wird und gleich $\pi/2$ ist.

5. Vorrichtung nach Anspruch 4, dadurch gekennzeichnet, dass die Phasenmodulationsmittel einen Spiegel (24) enthalten, der einem piezoelektrischen Transduktor zugeordnet ist.

6. Vorrichtung nach Anspruch 5, dadurch gekennzeichnet, dass die Kurve der Verschiebung des Spiegels abhängig von der Zeit eine Sägezahnkurve ist.

7. Vorrichtung nach Anspruch 6, dadurch gekennzeichnet, dass dieser Sägezahn eine Periode $\tau$ und eine Phasenverschiebungsamplitude von $k\,\lambda/2$ hat, wobei $\lambda$ die Wellenlänge des Strahls auf der Strecke ist, in der der Spiegel liegt, und $k$ eine ganze Zahl $\geqslant 1$ ist.

8. Vorrichtung nach Anspruch 7, dadurch gekennzeichnet, dass die Geschwindigkeit, mit der der Spiegel verschoben wird, gleich $\Lambda/(2\pi\tau)$ ist, wobei $\Lambda$ den Abstand zwischen den Schichten darstellt.

9. Vorrichtung nach Anspruch 4, dadurch gekennzeichnet, dass die Phasenmodulationsmittel eine akustooptische Einrichtung enthalten.

10. Vorrichtung nach einem beliebigen der vorhergehenden Ansprüche, dadurch gekennzeichnet, dass das Registriermaterial ein Wismuthsiliziumoxidmonokristall ist.

11. Vorrichtung nach Anspruch 10, dadurch gekennzeichnet, dass das elektrische Feld in der [001]-Richtung des Monokristalls angelegt wird, während die Strahlen auf die Oberflächen der Form {110} oder {⁻110} auftreffen.

## Claims

1. An optical device for real-time amplification of the radiant energy of an illumination beam, comprising a recording material consisting of a photosensitive electro-optical crystal (1) and having an inscription time $\tau$ during which a network of photo-induced index layers (12) is inscribed in real time, said layers being obtained by interference within the volume of said material (1) between an incident object beam (2) emanating from a coherent source and a reference beam (3) which is coherent with said object beam, a transfer of energy taking place between said reference beam (3) and said object beam (2), an electric field at right angles to the plane of the layers being applied to the terminals of said material (1), characterized in that mechanical means are provided so as to permit such a displacement of said photosensitive material (1) during the time of inscription in the material, that the phase shift between the index layers network (2) and the network of interference fringes (11) of these two beams is thus maintained constant and equal to $\pi/2$.

2. A device according to Claim 1, characterized in that the mechanical means comprise a motor (25).

3. A device according to any one of the preceding claims, characterized in that the displacement velocity of the photosensitive material (1) is equal to $\Lambda/(2\pi\tau)$, where $\Lambda$ is the pitch of the layers.

4. An optical device for real-time amplification of the radiant energy of an illumination beam, comprising a recording material consisting of a photosensitive electro-optical crystal (1) and having an inscription time $\tau$ during which a network of photo-induced index layers (12) is inscribed in real time, said layers being obtained by interference within the volume of said material (1) between an incident object beam (2) emanating from a coherent source and a reference beam (3) which is coherent with said object beam, a transfer of energy taking place between said reference beam (3) and said object beam (2), an electric field at right angles to the plane of the layers being applied to the terminals of said material (1), characterized in that phase-modulating means are placed on the path of one of the two beams so as to cause such a displacement of the layers during the inscription time in the material, that the phase shift between the index layer network (12) and the network of interference fringes (11) of these two beams is thus maintained constant and equal to $\pi/2$.

5. A device according to Claim 4, characterized in that the phase-modulating means comprise a mirror (24) associated to a piezo-electric transducer.

6. A device according to Claim 5, characterized in that the curve of displacement of the mirror as a function of time has a sawtooth wave profile.

7. A device according to Claim 6, characterized in that said sawtooth wave has a period $\tau$ and a phase-shift amplitude of $k \lambda/2$, where $\lambda$ is the wavelength of the beam on whose path the mirror is placed, where k is an integer higher than or equal to 1.

8. A device according to Claim 7, characterized in that the displacement velocity of the mirror is equal to $\Lambda/(2 \pi\tau)$, where $\Lambda$ is the pitch of the layers.

9. A device according to Claim 4, characterized in that the phase-modulating means comprise an acousto-optical device.

10. A device according to any one of the preceding claims, characterized in that the recording material is a monocrystal made of bismuth silicon oxide.

11. A device according to Claim 10, characterized in that the electric field is applied in the direction [001] of the monocrystal, the beams being incident upon the faces of the form $\{110\}$ or $\{^-110\}$.

# FIG.1

# FIG.2

# FIG.3

FIG. 4

0 061 372

FIG. 5

FIG. 7

FIG. 6

11

# FIG. 8

# FIG. 9

# FIG. 10